# FASCICULE DE BREVET EUROPEEN

(11) **EP 3 743 604 B1**
(45) Date de publication et mention de la délivrance du brevet: **14.12.2022**
(21) Numéro de dépôt: 19700593.7
(22) Date de dépôt: 14.01.2019
(51) Int. Cl.: F01N 1/00, F01N 13/18, F01N 13/08, F01N 13/14

(54) **DISPOSITIF COMPRENANT UN SILENCIEUX ET UN DÉFLECTEUR AÉRODYNAMIQUE**
VORRICHTUNG MIT EINEM SCHALLDÄMPFER UND EINEM AERODYNAMISCHEN DEFLEKTOR
DEVICE COMPRISING A SILENCER AND AN AERODYNAMIC DEFLECTOR

(30) Priorité: 22.01.2018 FR 1850460
(43) Date de publication de la demande: 02.12.2020
(73) Titulaire: Renault s.a.s, 92100 Boulogne Billancourt (FR)
(72) Inventeur: PINSARD, Romain, 78190 Trappes (FR)
(74) Mandataire: Renault Group
(86) Numéro de dépôt international: PCT/EP2019/050826
(87) Numéro de publication internationale: WO 2019/141630

(56) Documents cités:
- EP-A1- 2 573 339
- EP-A1- 3 514 345
- FR-A1- 2 897 830
- JP-A- H06 101 470
- US-A1- 2016 146 087

## Description

La présente invention se rapporte à un dispositif comprenant un silencieux d'échappement d'un moteur et un déflecteur aérodynamique, en particulier présent sous le plancher d'un véhicule automobile.

Un véhicule automobile à moteur à combustion interne comprend classiquement sous son plancher un silencieux qui a pour fonction principale d'atténuer les bruits des gaz émis par le moteur. La position, ainsi que la forme du silencieux, doivent répondre aux exigences des crash tests arrière tout en étant adaptés à l'architecture du véhicule. Classiquement un silencieux se présente sous forme d'une enveloppe fermée, de forme globale allongée, et présentant des orifices d'entrée et de sortie. Ladite enveloppe est aménagée intérieurement pour laisser passer les gaz du circuit d'échappement entre lesdits orifices d'entrée et de sortie. Les orifices d'entrée et de sortie sont respectivement raccordés à un tuyau d'entrée et à un ou plusieurs tuyaux de sortie sur le circuit d'échappement. Le silencieux est en général situé sous le plancher du véhicule et à proximité du bouclier arrière. Un silencieux d'un moteur en fonctionnement est très chaud, de ce fait un écran isolant thermiquement est installé sous le plancher du véhicule, dans une zone au-dessus du silencieux pour protéger cette zone.

Toutefois lorsque le véhicule roule, le flux d'air qui passe sous le véhicule rencontre le silencieux et est déplacé vers le plancher. Ce flux d'air crée des turbulences autour du silencieux, il peut tourbillonner et s'engouffrer sous le plancher pour être en partie retenu au niveau du bouclier arrière. Par conséquent la position et la forme du silencieux influent négativement sur la pénétration du véhicule dans l'air et entraînent une surconsommation de carburant, notamment dans le cas courant où l'axe longitudinal de l'enveloppe est sensiblement orienté suivant la direction transversale du véhicule. Au surplus le flux d'air peut engendrer des bruits supplémentaires sous le plancher.

Il convient donc d'améliorer l'aérodynamisme au niveau du silencieux.

Pour répondre à ce problème, on propose par exemple dans la demande de brevet US2016/0146087A1, d'ajouter un déflecteur aérodynamique, à section transverse en forme sensiblement de L ou V, qui est rapporté par fixation directement sur l'extérieur de l'enveloppe du silencieux. Dans le brevet US9464557B2, on propose un silencieux dont le déflecteur aérodynamique est intégré à l'enveloppe du silencieux par déformation / extension de la paroi de ladite enveloppe. Il existe aussi la solution proposée dans le document EP3514345.

Toutefois ces solutions obligent à fixer une pièce ou à déformer la paroi de l'enveloppe du silencieux, ce qui peut s'avérer difficile dans la mesure où l'enveloppe d'un silencieux est en général en acier inoxydable.

L'invention vise à proposer une solution alternative répondant au besoin d'améliorer l'aérodynamisme au niveau d'un silencieux.

A cet effet l'invention fournit un dispositif d'un véhicule à moteur comprenant un silencieux atténuant les bruits des gaz d'échappement du moteur qui présente une enveloppe fermée comportant des orifices d'entrée et de sortie des gaz d'échappement, et un déflecteur aérodynamique au niveau dudit silencieux, ledit dispositif comprenant un écran isolant thermiquement enveloppant la surface externe de l'enveloppe du silencieux et dont une portion est conformée en ledit déflecteur aérodynamique.

L'invention présente ainsi l'avantage de ne plus avoir besoin de fixer un écran isolant thermique sous le plancher, dans une zone au-dessus du silencieux comme c'est le cas usuellement. L'invention supprime l'étape d'installation d'un tel écran. De plus l'écran englobant le silencieux selon l'invention, la protection contre la chaleur dégagée au niveau du silencieux est efficace tout autour du silencieux, pas seulement au-dessus du silencieux.

De préférence l'enveloppe du silencieux est de forme allongée.

Ledit écran isolant thermiquement est solidarisé à la surface externe du silencieux d'une part par des soudures, en particulier entre l'écran isolant thermiquement et la périphérie des extrémités de la forme allongée de ladite surface externe du silencieux, et d'autre part par fixation à l'aide d'au moins un moyen de fixation de type équerre de fixation, soudé à ladite surface externe du silencieux et disposé au niveau de la portion conformée en déflecteur aérodynamique de l'écran isolant thermiquement, en particulier au niveau interne de ladite portion. Avantageusement un moyen de liaison de type vis traverse ladite portion d'écran conformée en déflecteur, en vis-à-vis dudit moyen de fixation de type équerre, et est inséré dans ledit moyen de fixation qui comprend un perçage. Ledit moyen de liaison de type vis présente une longueur adaptée à l'espace interne de la portion conformée en déflecteur de manière à ne pas percer le silencieux.

Avantageusement le dispositif comprend plusieurs équerres de fixation soudées longitudinalement à la surface externe du silencieux, de manière à avoir une solidarisation solide entre l'écran isolant thermiquement et le silencieux. De plus ces équerres ont l'avantage de rigidifier la portion conformée en déflecteur aérodynamique.

Plus particulièrement le silencieux comprend une enveloppe fermée de forme allongée, définissant un corps creux, présentant une partie supérieure et une partie inférieure, ledit écran isolant thermiquement étant disposé autour de l'enveloppe du silencieux de sorte que le déflecteur aérodynamique soit présent longitudinalement en partie inférieure et à l'arrière du silencieux.
Les notions de supérieur, inférieur, avant, et arrière, sont définies par rapport au véhicule, et dans l'utilisation du dispositif, c'est-à-dire par rapport à la position du dispositif sous le plancher du véhicule.

De préférence selon l'invention, la portion de l'écran isolant thermiquement conformée en déflecteur aérodynamique est de forme allongée à section transversale sensiblement en forme de L dont la barre horizontale est sensiblement inclinée vers la surface externe de l'enveloppe du silencieux, l'espace intérieur du L définissant un espace intérieur entre ladite portion d'écran isolant thermiquement et la surface externe du silencieux. Lesdits moyens de fixation de type équerres de fixation sont disposés dans cet espace intérieur, et soudés à la surface externe de l'enveloppe du silencieux. De préférence ces équerres ont sensiblement une forme en L, épousant la forme intérieure de la portion conformée en déflecteur.

Plus particulièrement, les parties inférieure et supérieure du dispositif, et en particulier de l'enveloppe du silencieux sont sensiblement délimitées par une ligne médiane longitudinale (réelle ou virtuelle) de chaque côté du corps creux. Ledit corps creux est aménagé intérieurement pour laisser traverser les gaz d'échappement en les atténuant. Ledit corps creux du silencieux est muni d'orifices d'entrée et de sortie communiquant avec le circuit d'échappement de manière connue en soi, et bien évidemment ces orifices ne sont pas bouchés par la présence de l'écran isolant thermiquement.

Selon un mode de réalisation préféré de l'invention, l'écran isolant thermiquement enveloppant la surface extérieure du silencieux est constitué en deux parties, et de préférence une première partie, en particulier formant une première moitié, recouvre la partie supérieure de la surface externe du silencieux, et une seconde partie, en particulier formant la seconde moitié, qui comprend la portion conformée en déflecteur aérodynamique est disposée en prolongement des extrémités longitudinales de ladite première partie (moitié), autour de la partie inférieure de la surface externe de l'enveloppe du silencieux.

Avantageusement les jonctions entre lesdites deux parties de l'écran isolant thermiquement sont réalisées par soudure, pour assurer la solidarisation entre ces parties formant l'écran isolant thermiquement, et aussi l'étanchéité thermique entre ces parties autour du silencieux. Ledit dispositif comprend ainsi une ligne de points de soudure à chaque jonction entre lesdites deux parties de l'écran.

Selon un mode de réalisation préféré de l'invention, ladite première partie (ou moitié) de l'écran isolant thermiquement se présente sous forme d'une feuille d'aluminium gaufrée, le cas échéant comprenant une couche interne d'isolant acoustique et thermique, et ladite seconde partie (ou moitié) présentant la portion conformée en déflecteur aérodynamique se présente sous forme d'une tôle, en particulier en aluminium ou en acier.

Selon un autre mode de réalisation particulier de l'invention, l'écran isolant thermiquement enveloppant la surface extérieure du silencieux est constitué d'une seule pièce.

De préférence selon l'invention, l'épaisseur de l'écran isolant thermiquement est de l'ordre du millimètre, notamment comprise entre 0,5 et 1,5 mm.

L'invention concerne aussi un véhicule automobile à moteur, en particulier à combustion interne, équipé d'un dispositif de silencieux tel que décrit précédemment installé sous le plancher dudit véhicule à proximité du bouclier arrière.

De préférence selon l'invention, le plancher du véhicule est dénué d'un écran isolant thermique au-dessus dudit dispositif de silencieux.

D'autres particularités et avantages de l'invention ressortiront à la lecture de la description faite ci-après de modes de réalisation particuliers de l'invention, à titre indicatif mais non limitatif, en référence aux dessins annexés pour lesquels :
- la figure 1 représente selon une vue en volume, un dispositif de silencieux d'un véhicule à moteur selon l'invention ;
- la figure 2 illustre partiellement l'arrière d'un véhicule équipé du dispositif de silencieux selon l'invention de la figure 1, représenté en coupe transversale.

Dans la suite de la description il est fait référence à un repère XYZ, dans lequel X est la direction longitudinale avant arrière du véhicule, orientée vers l'arrière, Y est la direction transversale orientée vers la droite du véhicule, et Z est la direction verticale orientée vers le haut du véhicule.

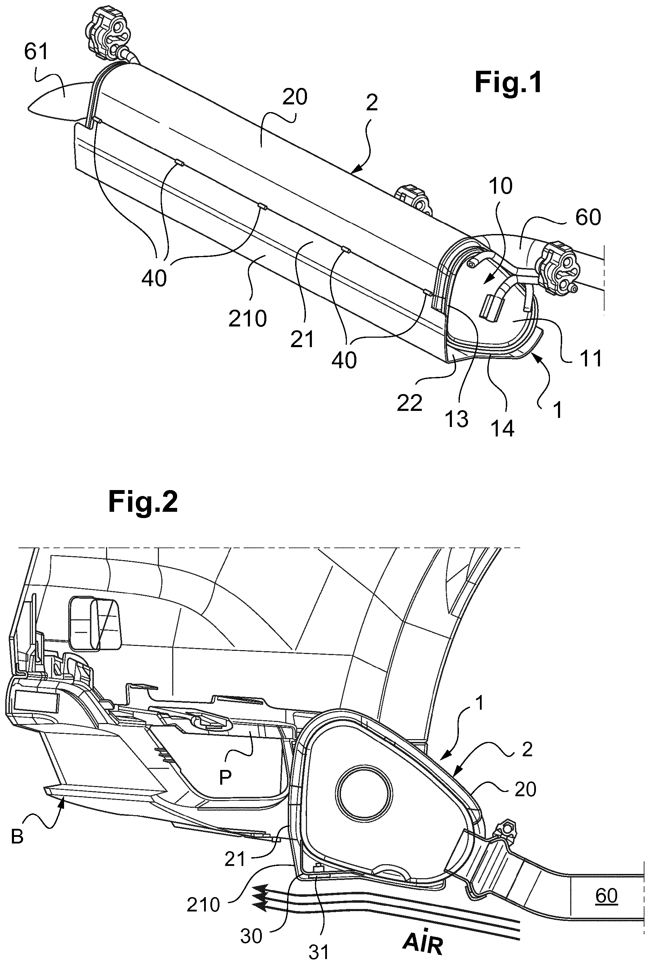

La figure 1 illustre selon une vue en volume de trois-quarts un dispositif selon l'invention notamment destiné à un véhicule automobile à moteur à combustion interne. Ce dispositif comprend un silencieux 1 se présentant sous forme d'une enveloppe 10 en acier inoxydable, fermée, définissant un corps creux de forme globale allongée, fermé en ses extrémités axiales 11 (sur la figure 1, la seconde extrémité axiale n'est pas visible). L'enveloppe comprend un orifice d'entrée à l'avant du dispositif, selon l'exemple au centre de la paroi latérale avant du dispositif, et un orifice de sortie sur un côté du dispositif (non visibles sur la figure 1). De manière connue en soi, ledit corps creux est aménagé intérieurement pour laisser passer les gaz du circuit d'échappement du moteur, en les atténuant, entre lesdits orifices d'entrée et de sortie. Les orifices d'entrée et de sortie sont raccordés respectivement à un tuyau d'entrée 60 et à un tuyau de sortie 61 sur le circuit d'échappement.

La surface externe de ladite enveloppe du silencieux, hormis les orifices d'entrée et de sortie, est entourée par un écran isolant thermiquement 2. Ledit écran 2 se compose de deux parties, une partie supérieure 20 formant une première moitié qui recouvre la partie supérieure de l'enveloppe du silencieux et une partie inférieure 21 formant une seconde moitié se disposant autour de la partie inférieure de l'enveloppe du silencieux. Lesdites moitié supérieure 20 et inférieure 21 sont jointes par un ensemble de points de soudure 40 suivant leur ligne de jonction longitudinale arrière et des points de soudure suivant leur ligne de jonction longitudinale avant (non visible sur la figure 1). Les moitiés d'écran sont en outre fixées à l'enveloppe du silencieux d'une part par des points de soudure avec les extrémités axiales 10 de ladite enveloppe, et d'autre part par des moyens de fixation de type équerres 30 et vis 31 avec la partie inférieure 21 de l'enveloppe du silencieux comme décrit plus en détails ci-après .

La partie inférieure 21 dudit écran isolant 2 présente une portion conformée en déflecteur aérodynamique 210. Ce déflecteur 210 est disposé longitudinalement suivant la partie inférieure et à l'arrière du silencieux, et plus précisément la partie active du déflecteur se trouve au niveau de l'arête (arrondie) entre la face arrière 13 et la face inférieure 14 de l'enveloppe du silencieux. Cette portion conformée en déflecteur 210 présente une section transversale en forme sensiblement de L dont la barre horizontale est sensiblement inclinée en direction de l'enveloppe du silencieux, et plus particulièrement de la face inférieure 14 de ladite enveloppe. Cette portion en L correspondant à la partie active du déflecteur pour dévier le flux d'air arrivant depuis l'avant du véhicule comme indiqué par les flèches sur la figure 2. En cette portion en L, la paroi de l'écran thermique 2 présente un espace intérieur 22 entre sa face intérieure et la face externe de l'enveloppe du silencieux.

Cette figure 2 illustre, selon une vue transversale partielle, la partie sous plancher arrière d'un véhicule automobile, le dispositif de silencieux selon l'invention étant disposé sous le plancher P du véhicule, à proximité du bouclier arrière B, et de sorte que son axe longitudinal soit orienté sensiblement suivant la direction transversale du véhicule. Selon l'exemple illustré, la moitié inférieure 21 de l'écran thermique 2 est fixée par des moyens de fixation se présentant sous forme d'équerres de fixation 30 présentes dans l'espace intérieur de la portion conformée en déflecteur, et soudées à la surface externe de l'enveloppe du silencieux, ces équerres ayant aussi une forme en L qui suit la forme interne dudit déflecteur. Un perçage dans l'équerre reçoit une vis 31 introduite à travers la paroi de ladite portion de l'écran thermique, de manière à fixer cette partie d'écran thermique à l'enveloppe du silencieux, et par ailleurs pour rigidifier cette partie de l'écran de manière à dévier efficacement le flux d'air le plus bas possible sous le véhicule, et notamment hors du bouclier arrière B.

Selon l'exemple, la moitié supérieure 20 de l'écran isolant thermiquement se présente sous forme d'une feuille d'aluminium gaufrée, et sa moitié inférieure 21 se présente sous forme d'une tôle en acier, dont une partie a été conformée en déflecteur comme décrit ci-dessus.

Le véhicule équipé de ce dispositif de silencieux entourée d'une paroi combinant isolation thermique et fonction aérodynamique n'a pas besoin de comporter un écran isolant thermiquement sous son plancher pour l'isoler de la chaleur dégagée au niveau du silencieux.

## Revendications

1. Dispositif d'un véhicule à moteur comprenant un silencieux (1) atténuant les bruits des gaz d'échappement du moteur qui présente une enveloppe fermée (10) comportant des orifices d'entrée et de sortie des gaz d'échappement, et un déflecteur aérodynamique au niveau dudit silencieux, **caractérisé en ce que** ledit dispositif comprend un écran isolant thermiquement (2) enveloppant la surface externe de l'enveloppe (1) du silencieux et dont une portion (210) est conformée en ledit déflecteur aérodynamique, **caractérisé en ce que** ledit écran isolant thermiquement est solidarisé à la surface externe de l'enveloppe du silencieux d'une part par des soudures, et d'autre part par fixation à l'aide d'au moins un moyen de fixation de type équerre de fixation (30), soudé à ladite surface externe de l'enveloppe du silencieux et disposé au niveau de la portion de l'écran isolant thermiquement conformée en déflecteur aérodynamique.

2. Dispositif selon l'une des revendications 1, **caractérisé en ce qu'**il comprend un moyen de liaison de type vis (31) qui traverse ladite portion d'écran conformée en déflecteur, en vis-à-vis dudit moyen de fixation de type équerre, et est inséré dans ledit moyen de fixation qui comprend un perçage.

3. Dispositif selon l'une des revendications 1 à 2, **caractérisé en ce que** l'enveloppe du silencieux présente une partie supérieure et une partie inférieure, ledit écran isolant thermiquement étant disposé autour de l'enveloppe du silencieux de sorte que le déflecteur aérodynamique soit présent longitudinalement en partie inférieure et à l'arrière du silencieux.

4. Dispositif selon l'une des revendications 1 à 3, **caractérisé en ce que** , la portion de l'écran isolant thermiquement conformée en déflecteur aérodynamique (210) est de forme allongée à section transversale sensiblement en forme de L dont la barre horizontale est sensiblement inclinée vers la surface externe de l'enveloppe du silencieux de forme allongée.

5. Dispositif selon la revendication 4 et l'une des revendications 1 à 3, **caractérisé en ce que** l'espace intérieur (22) de ladite forme en L entre ladite portion d'écran isolant thermiquement et la surface externe de l'enveloppe du silencieux, comprend lesdits moyens de fixation de type équerres de fixation (30), et de préférence ces dits moyens de fixation ont sensiblement une forme en L.

6. Dispositif selon l'une des revendications 1 à 5, **caractérisée en ce que** l'écran isolant thermiquement enveloppant la surface externe de l'enveloppe du silencieux est constitué en deux parties, une première partie (20) recouvrant la partie supérieure de la surface externe de l'enveloppe du silencieux, et une seconde partie (21) qui comprend la portion conformée en déflecteur aérodynamique (210) et qui est disposée en prolongement des extrémités longitudinales de ladite première partie, disposée autour de la partie inférieure de la surface externe de l'enveloppe du silencieux.

7. Dispositif selon la revendication 6, **caractérisé en ce que** ledit dispositif comprend une ligne de points de soudure (40) à chaque jonction entre lesdites deux parties de l'écran.

8. Dispositif selon l'une des revendications 6 ou 7, **caractérisé en ce que** ladite première partie de l'écran isolant thermiquement se présente sous forme d'une feuille d'aluminium gaufrée, le cas échéant comprenant une couche interne d'isolant acoustique et thermique, et ladite seconde partie présentant la portion conformée en déflecteur aérodynamique se présente sous forme d'une tôle, en particulier en aluminium ou en acier.

9. Véhicule automobile à moteur, en particulier à combustion interne, équipé d'un dispositif de silencieux défini à l'une des revendications 1 à 8, installé sous le plancher (P) dudit véhicule à proximité du bouclier arrière (B).

## Patentansprüche

1. Vorrichtung eines Kraftfahrzeugs, umfassend einen Schalldämpfer (1), der die Geräusche der Abgase des Motors dämpft und einen geschlossenen Mantel (10) mit Ein- und Auslassöffnungen für die Abgase aufweist, und einen aerodynamischen Deflektor im Bereich des Schalldämpfers, **dadurch gekennzeichnet, dass** die Vorrichtung einen wärmeisolierenden Schirm (2) umfasst, der die Außenfläche des Mantels (1) des Schalldämpfers umgibt und von dem ein Abschnitt (210) als der aerodynamische Deflektor geformt ist, **dadurch gekennzeichnet, dass** der wärmeisolierende Schirm einerseits durch Schweißverbindungen und andererseits durch Befestigung mit Hilfe mindestens eines befestigungswinkelartigen Befestigungsmittels (30), das mit der Außenfläche des Schalldämpfermantels verschweißt und im Bereich des Abschnitts des als aerodynamischer Deflektor geformten wärmeisolierenden Schirms angeordnet ist, fest mit der Außenfläche des Schalldämpfermantels verbunden ist.

2. Vorrichtung nach einem der Ansprüche 1, **dadurch gekennzeichnet, dass** sie ein schraubenartiges Verbindungsmittel (31) umfasst, das den als Deflektor geformten Schirmabschnitt gegenüber dem winkelartigen Befestigungsmittel durchdringt und in das Befestigungsmittel, das eine Bohrung umfasst, eingeführt ist.

3. Vorrichtung nach einem der Ansprüche 1 bis 2, **dadurch gekennzeichnet, dass** der Mantel des Schalldämpfers einen oberen Teil und einen unteren Teil aufweist, wobei der wärmeisolierende Schirm um den Mantel des Schalldämpfers herum angeordnet ist, so dass sich der aerodynamische Deflektor in Längsrichtung am unteren Teil und an der Rückseite des Schalldämpfers befindet.

4. Vorrichtung nach einem der Ansprüche 1 bis 3, **dadurch gekennzeichnet, dass** der Abschnitt des als aerodynamischer Deflektor (210) geformten wärmeisolierenden Schirms eine längliche Form mit einem im Wesentlichen L-förmigen Querschnitt aufweist, dessen horizontaler Balken im Wesentlichen zur Außenfläche des länglich geformten Schalldämpfermantels hin geneigt ist.

5. Vorrichtung nach Anspruch 4 und einem der Ansprüche 1 bis 3, **dadurch gekennzeichnet, dass** der innere Raum (22) der L-Form zwischen dem wärmeisolierenden Schirmabschnitt und der Außenfläche des Schalldämpfermantels die befestigungswinkelartigen Befestigungsmittel (30) umfasst und diese Befestigungsmittel vorzugsweise im Wesentlichen eine L-Form aufweisen.

6. Vorrichtung nach einem der Ansprüche 1 bis 5, **dadurch gekennzeichnet, dass** der wärmeisolierende Schirm, der die Außenfläche des Schalldämpfermantels umgibt, aus zwei Teilen gebildet ist, und zwar einem ersten Teil (20), der den oberen Teil der Außenfläche des Schalldämpfermantels bedeckt, und einem zweiten Teil (21), der den als aerodynamischer Deflektor (210) geformten Abschnitt bedeckt, in Verlängerung der Längsenden des ersten Teils angeordnet ist und um den unteren Teil der Außenfläche des Schalldämpfermantels herum angeordnet ist.

7. Vorrichtung nach Anspruch 6, **dadurch gekennzeichnet, dass** die Vorrichtung eine Linie von Schweißpunkten (40) an jeder Verbindungsstelle zwischen den beiden Teilen des Schirms umfasst.

8. Vorrichtung nach einem der Ansprüche 6 oder 7, **dadurch gekennzeichnet, dass** der erste Teil des wärmeisolierenden Schirms die Form einer geprägten Aluminiumfolie aufweist und gegebenenfalls eine innere Schicht aus einer Schall- und Wärmeisolierung umfasst und dass der zweite Teil mit dem als aerodynamischer Deflektor geformten Abschnitt die Form eines Blechs, insbesondere aus Aluminium oder Stahl, aufweist.

9. Kraftfahrzeug mit Motor, insbesondere mit Verbrennungsmotor, das mit einer Schalldämpfervorrichtung nach einem der Ansprüche 1 bis 8 ausgestattet ist, die unter dem Boden (P) des Fahrzeugs in der Nähe des hinteren Stoßfängers (B) angebracht ist.

## Claims

1. Device of a motor vehicle comprising a silencer (1) damping the noise of the engine exhaust gases, which has a closed jacket (10) comprising exhaust gas input and output orifices, and an aerodynamic deflector on said silencer, **characterized in that** said device comprises a thermally insulating screen (2) jacketing the outer surface of the jacket (1) of the silencer, a portion (210) of which forms said aerodynamic deflector, **characterized in that** said thermally insulating screen is secured to the outer surface of the jacket of the silencer on the one hand by welds, and on the other hand by fixing using at least one fixing means of fixing bracket (30) type, welded to said outer surface of the jacket of the silencer and disposed on the portion of the thermally insulating screen forming the aerodynamic deflector.

2. Device according to one of Claims 1, **characterized in that** it comprises a link means of screw (31) type which passes through said screen portion forming the deflector, facing said fixing means of bracket type, and is inserted into said fixing means which comprises a drill hole.

3. Device according to either of Claims 1 and 2, **characterized in that** the jacket of the silencer has an upper part and a lower part, said thermally insulating screen being disposed around the jacket of the silencer so that the aerodynamic deflector is present longitudinally in the lower part and at the rear of the silencer.

4. Device according to one of Claims 1 to 3, **characterized in that** the portion of the thermally insulating screen forming the aerodynamic deflector (210) is of elongate form with substantially L-shaped cross section, the horizontal bar of which is substantially inclined toward the outer surface of the jacket of the silencer of elongate form.

5. Device according to Claim 4 and one of Claims 1 to 3, **characterized in that** the space (22) inside said L shape between said thermally insulating screen portion and the outer surface of the jacket of the silencer comprises said fixing means of fixing bracket (30) type, and preferably said fixing means are substantially L shaped.

6. Device according to one of Claims 1 to 5, **characterized in that** the thermally insulating screen jacketing the outer surface of the jacket of the silencer consists of two parts, a first part (20) covering the upper part of the outer surface of the jacket of the silencer, and a second part (21) which comprises the portion forming the aerodynamic deflector (210) and which is disposed in the extension of the longitudinal ends of said first part, disposed around the lower part of the outer surface of the jacket of the silencer.

7. Device according to Claim 6, **characterized in that** said device comprises a line of weld spots (40) at each join between said two parts of the screen.

8. Device according to either of Claims 6 and 7, **characterized in that** said first part of the thermally insulating screen takes the form of an embossed aluminium sheet, if necessary comprising an inner layer of acoustic and thermal insulation, and said second part having the portion forming the aerodynamic deflector takes the form of a sheet, in particular of aluminium or of steel.

9. Motor vehicle, in particular an internal combustion engine vehicle, equipped with a silencer device defined in one of Claims 1 to 8 installed under the floor (P) of said vehicle in proximity to the rear bumper (B).
